# EUROPEAN PATENT APPLICATION

(11) **EP 2 409 765 A1**
(43) Date of publication of application: **25.01.2012**
(21) Application number: 10170356.9
(22) Date of filing: 21.07.2010
(51) Int. Cl.: B01L 3/00, B01F 13/00, B01F 15/02

(54) **Microfluidic system and process for mixing liquid fluids**

(71) Applicant: F. Hoffmann-La Roche AG, 4070 Basel (CH); Roche Diagnostics GmbH, 68305 Mannheim (DE)
(72) Inventor: Heinrich, Michael A., 8001 Zürich (CH)
(74) Representative: Gebauer, Dieter Edmund

(57) **Abstract**

The present invention pertains to a microfluidic system (1) for mixing liquid fluids, comprising: a main line (2); one or more first feed lines (6) for feeding one or more first liquid fluids to said main line, said first feed lines being connected to said main line and equipped with controllable first feed line valves (8) for blocking or releasing liquid fluid flow to said main line; at least one second feed line (9) for feeding a second liquid fluid to said main line, said second feed line being connected to said main line and equipped with a controllable second feed line valve (10) for blocking or releasing liquid fluid flow to said main line; two or more dosage lines (11,12) for dosing liquid fluids, said dosage lines being connected to said main line and equipped with controllable dosage line valves (13,14) for blocking or releasing liquid fluid flow between said dosage lines and said main line, said dosage lines comprising at least one first dosage line sized to receive at least a predefined first fluid volume and one second dosage line sized to receive at least a predefined second fluid volume; one or more fluid chambers (43) for receiving liquid fluids being connected to said main line via controllable first and second fluid chamber valves (44,45) for blocking or releasing liquid fluid flow between said fluid chambers and said main line; at least one pressure actuator (15,15') for generating a positive or negative pressure in said dosage lines; and a controller (52) set up to control activity of said pressure actuator and said valves in a manner to mix said one or more first liquid fluids with said second liquid fluid. It further relates to a process for mixing liquid fluids in which the fluids are fed in a main channel and drawn in fluid dosage lines for discharging into a fluid chamber.

## Description

### TECHNICAL FIELD

The present invention is in the field of in vitro diagnostics and more particularly relates to a microfluidic system and a process for mixing liquid fluids.

### BACKGROUND OF THE INVENTION

In recent years, a strong demand for the automated analysis of liquid samples can be observed which is primarily due to the fact that there is an ongoing increase in the number of clinical analyses. Sample analysis typically involves mixing the samples with one or more reagents to determine absence/presence and optionally concentration of one or more analytes contained therein.

Due to low sample consumption, fast analysis times and high sample throughput, many efforts have been made to develop integrated fluidic systems, among these microfluidic systems, for the automated analysis of liquid samples. Microfluidic systems are well-known to those of skill in the art and have been extensively described in the patent literature.

Specifically, US-Patent No. 7,608,464 B2 describes a method of combining liquid fluids for testing a liquid sample. In this method, the liquid sample and reagents are provided in feed ducts configured for connection to a liquid medium-filled dosage space via inlet valves. The sample and reagents can be drawn into the dosage space by opening the inlet valves and withdrawing amounts of the liquid medium from the dosage space. Hence, combining of fluids is invariably attended by diluting both sample and reagents with liquid medium contained in the dosage space.

In light of the foregoing, it is an object of the invention to provide an improved microfluidic system and process for the automated mixing of a liquid sample with one or more liquid reagents for testing the sample. This object is met by a microfluidic system and a process for mixing liquid fluids according to the independent claims. Preferred embodiments of the invention are given by the features of the dependent claims.

### SUMMARY OF THE INVENTION

As used herein, the term "sample" generally relates to biological and non-biological (chemical) fluids. Biological fluids such as body fluids, e.g., blood, serum, urine, milk, saliva and cerebrospinal fluid, can, e.g., be subject to analyses and assays in medical and pharmaceutical research and clinical diagnosis, e.g., to determine presence/absence and optionally concentration of one or more analytes contained therein. Non-biological fluids can, e.g., be subject to chemical analyses and assays, e.g., drug interaction screening, environmental analysis and identification of organic substances. Samples can also be pre-processed fluids such as extracts of body fluids containing target nucleic acids used as starting materials for the PCR.

As used herein, the term "reagent" generally relates to any liquid fluid. In the more strict sense of the term, a reagent is a liquid solution containing a reactant, typically a compound or agent capable of binding to or transforming one or more analytes present in a liquid sample. Accordingly, reagents may contain reactants for reaction with one or more analytes contained in the sample. Examples of reactants are enzymes, enzyme substrates, conjugated dyes, protein-binding molecules, nucleic acid binding molecules, antibodies, chelating agents, promoters, inhibitors, epitopes, antigens and catalysts. Reagents, however, can also be non-reacting fluids such as buffers, solvents and diluting fluids. A reagent can, for example, be a second liquid sample interacting with a first liquid sample.

As used herein, the term "line" generally relates to a system component configured for conveying liquid fluids and gaseous fluids.

As used herein, the term "connected" generally relates to a fluidic connection between lines. Connected lines can be fluidically connected in direct manner, i.e., in fluid communication with respect to each other. Connected lines can also be fluidically connected in indirect manner. Connected lines can also be equipped with flow regulating means such as fluid valves.

As used herein, the term "valve" or "fluid valve" generally relates to a valve which with respect to liquid fluids can selectively be brought into one of two distinct states: a valve open state in which liquid fluid can pass through the valve and a valve closed state in which liquid fluid is blocked to pass the valve. Specifically, valves can, e.g., be configured as freeze-thaw valves which can selectively be brought into one of three distinct states with respect to liquid and gaseous fluids: a valve open state in which both liquid and gaseous fluids can pass through the valve, a first valve closed state in which gaseous fluid can pass through the valve but liquid fluid is blocked to pass the valve and a second valve closed state in which both liquid and gaseous fluids are blocked to pass the valve. If not specified in more detail, a "valve closed state" of the freeze-thaw valve can be the first or the second valve closed state. Freeze-thaw valves are well-known to those of skill in the art and in the patent literature, e.g., are described in US patent application No. 2003/0094206 A1 and US-Patent No. 6,311,713 B1.

As used herein, the term "microfluidic" generally refers to cross-sectional dimensions which typically are on the order of millimetre and sub-millimetre scale. In some embodiments, cross-sectional dimensions range from 0.01 millimetres to 2 millimetres. In some embodiments, cross-sectional areas range from 0.01 x 0.01 mm² to 2 x 2 mm². In some embodiments, microfluidic features enable manipulation of fluid volumes which are on the order of 100 µl or less at a flow rate, e.g., on the order of 0.1 to 100 µl/sec or higher.

As used herein, the term "positive pressure" relates to pressures higher than atmospheric (ambient) pressure and the term "negative pressure" relates to pressures smaller than atmospheric pressure.

According to the invention, a newmicrofluidic system for mixing liquid fluids is proposed. Although the system of the invention is particularly suitable in (bio-)chemical applications including in-vitro diagnostics it will also be useful with a wide variety of non-(bio-) chemical applications. In some embodiments, the system of the invention is being used for diagnostic assays such as clinical-chemistry assays and immunoassays. Typical diagnostic assays comprise the qualitative and/or quantitative analysis of analytes such as albumin, ALP (alkaline phosphatase), ALT (alanine aminotransferase), ammonia, amylase, aspartat, aminotransferase, bicarbonate, bilirubin, calcium, cardiac markers, cholesterol, creatinine kinase, D-dimer, ethanol, g-glutamyltransferase, glucose, HBA1c (haemoglobin A1c), HDL-cholesterol, iron, lactate, lactate dehydrogenase, LDL-cholesterol, lipase, magnesium, phosphorus inorganic, potassium, sodium, total protein, triglycerides, UREA, and uric acid. This list is not exhaustive.

In some embodiments, the microfluidic system comprises a main line for conveying liquid fluids and one or more first feed lines connected to the main line for feeding one or more first liquid fluids to the main line. In some embodiments, the one or more first liquid fluids are reagents. Specifically, in some embodiments, each of the first feed lines is equipped with a controllable first feed line valve for blocking or releasing liquid fluid flow to the main line which, in some embodiments, is arranged adjacent the main line.

In some embodiments, the microfluidic system further comprises at least one second feed line connected to the main line for feeding a second liquid fluid to the main line. In some embodiments, the second liquid fluid is a liquid sample to be tested. Specifically, in some embodiments, the second feed line is equipped with a controllable second feed line valve for blocking or releasing liquid fluid flow to the main line which, in some embodiments, is arranged adjacent the main line.

In some embodiments, the microfluidic system yet further comprises two or more dosage lines both of which are connected to the main line for dosing liquid fluids. Specifically, each of the dosage lines is equipped with a controllable dosage line valve for blocking or releasing liquid fluid flow between the dosage line and the main line which, in some embodiments, are arranged adjacent the main line. In some embodiments, the dosage lines comprise at least one first dosage line sized to receive at least a predefined first fluid volume and one second dosage line sized to receive at least a predefined second fluid volume. In some embodiments, the at least one first dosage line is being used for dosing the one or more first liquid fluids, e.g. reagents, while the second dosage line is being used for dosing the second liquid fluid, e.g. sample.

In some embodiments, the microfluidic system yet further comprises at least one pressure actuator such as a pump for pumping liquid and/or gaseous fluids for generating a positive or negative pressure in the dosage lines. In some embodiments, the pressure actuator is connected to the first and second dosage lines in direct manner. In some embodiments, the pressure actuator is able to pump liquid fluids. In some embodiments, the pressure actuator is able to pump both liquid and gaseous fluids.

In some embodiments, the microfluidic system yet further comprises one or more fluid chambers for receiving liquid fluids which may be arranged in parallel alignment with respect to the main line. Specifically, in some embodiments, each of the fluid chambers is connected to the main line via controllable first and second fluid chamber valves for blocking or releasing liquid fluid flow between the fluid chambers and the main line which, in some embodiments, are arranged adjacent the main line.

In some embodiments, the microfluidic system yet further comprises at least one waste fluid port which, in some embodiments, communicates with the main line for removing waste fluid.

In some embodiments, the microfluidic system of the invention yet further comprises a controller set up to control activity of the at least one pressure actuator and the valves in a manner to automatically mix the one or more first fluids with the second fluid.

The microfluidic system of the invention allows liquid fluids to be precisely dosed and readily mixed without undesired dilution by liquid system fluid. Furthermore, mixing of the one or more first and/or second fluids with liquid system fluid when drawing these fluids into the dosage lines can be avoided by gas bubbles (e.g. air bubbles) located in-between the one or more first and/or second fluids and the liquid system fluid. Otherwise, since gas bubbles can be removed between the one or more first and/or second fluids and the liquid system fluid undesired effects due to gas compressibility can advantageously be avoided when discharging the one or more first and/or second fluids into the one or more fluid chambers.

In some embodiments, the first and second dosage lines are connected to the main line by at least one communication line. In some embodiments, the at least one communication line connects the first and second dosage lines. Specifically, in some embodiments, the first and second dosage lines are connected through at least one first communication line equipped with a controllable first communication line valve for blocking or releasing liquid fluid flow between the first dosage line and the first communication line and a controllable second communication line valve for blocking or releasing liquid fluid flow between the second dosage line and the first communication line. In some embodiments, the first and second communication line valves are arranged adjacent the first and second dosage lines, respectively. Accordingly, by means of the first communication line, liquid fluids can readily be transferred between the first and second dosage lines. In some embodiments, the first communication line communicates with the at least one waste fluid port in direct manner. Accordingly, liquid fluids can readily be removed from the dosage lines in direct manner.

In some embodiments, the at least one first communication line is connected to the main line via a second communication line. In some embodiments, the at least one communication line, in particular the second communication line, is being equipped with a third communication line valve for blocking or releasing liquid fluid flow between the communication line and the main line, which, in some embodiments, is arranged adjacent the main line. In some embodiments, the at least one communication line, particularly the second communication line, is sized to receive at least a combined fluid volume of the predefined second fluid volume of the second dosage line and one or more predefined first fluid volumes of the first dosage line. Accordingly, the at least one communication line can be used to receive mixtures of liquid fluids such as sample/reagent(s) mixtures.

In some embodiments, the at least one communication line opens into the first and second dosage lines at first and second line openings defining first and second line portions in a manner that the first line portion of the first dosage line is sized to receive at least the predefined first fluid volume and the first line portion of the second dosage line is sized to receive at least the predefined second fluid volume. Specifically, the second line portion of the first dosage line communicates with the main line via the first line portion of the first dosage line, while the second line portion of the second dosage line communicates with the main line via the first line portion of the second dosage line. Accordingly, liquid fluids can be removed from the first and second dosage lines by means of the at least one communication line while the predefined first and second fluid volumes are simultaneously kept in the first line portions of the first and second dosage lines, respectively.

In some embodiments, each of the first and second dosage lines is connected to the main line by plural communication lines. In some embodiments, each of the plural communication lines connects the first and second dosage lines. Specifically, in some embodiments, the first and second dosage lines are connected through plural first communication lines, each of which being equipped with a controllable first communication line valve for blocking or releasing liquid fluid flow between the first dosage line and the first communication line and a controllable second communication line valve for blocking or releasing liquid fluid flow between the second dosage line and the first communication line. In some embodiments, the first and second communication line valves are arranged adjacent the first and second dosage lines, respectively. In some embodiments, each of the first communication lines communicates with the at least one waste fluid port in direct manner. Accordingly, liquid fluids can readily be removed from the dosage lines in direct manner.

In some embodiments, each of the first communication lines is connected to the main line via at least one second communication line. In some embodiments, the second communication line is equipped with a controllable third communication line valve for blocking or releasing liquid fluid flow the second communication line and the main line.

In some embodiments, each of the plural communication lines opens into the first and second dosage lines at first and second line openings defining first line portions and one second line portion of each of the first and second dosage lines. Specifically, in some embodiments, the plural first line portions of the first dosage line are sized to receive various fluid volumes different with respect to each other, at least one of which at least includes the predefined first fluid volume. Specifically, the first line portions of the second dosage line are sized to receive various fluid volumes different with respect to each other, at least one of which at least includes the predefined second fluid volume. Specifically, the second line portion of the first dosage line communicates with the main line via the first line portions of the first dosage line, while the second line portion of the second dosage line communicates with the main line via the first line portions of the second dosage line.

Accordingly, various fluid volumes can be drawn into the plural first line portions of the first dosage line and/or various fluid volumes can be drawn into the plural first line portions of the second dosage line.

In some embodiments, the microfluidic system further comprises one or more third feed lines for feeding liquid and/or gaseous system fluid to the main line. The third feed lines are connected to the second line portions of the first and second dosage lines and are equipped with controllable third feed line valves for blocking or releasing liquid fluid flow between the third feed lines and the first and second dosage lines.

In some embodiments, the main line is being equipped with a static mixer for (passively) mixing liquid fluids flowing through.

According to the invention, a new process for mixing liquid fluids in a microfluidic system is proposed. In some embodiments, the process is implemented in the microfluidic system as above-described and, therefore, may contain a step of providing such microfluidic system.

In some embodiments, the process comprises a step of feeding one or more first liquid fluids into a main line.

In some embodiments, the process comprises a step of drawing the one or more first liquid fluids into at least one first fluid dosage line connected to the main line and sized to receive at least a predefined first fluid volume by generating a negative pressure therein. In some embodiments, the one or more first liquid fluids are drawn into the at least one first fluid dosage line by means of liquid system fluid. In some embodiments, a gas bubble, e.g. an air bubble, is present in-between the one or more first liquid fluids and the liquid system fluid so as to avoid mixing between the one or more first liquid fluids and the liquid system fluid.

In some embodiments, the process comprises a step of feeding a second liquid fluid into the main line.

In some embodiments, the process comprises a step of drawing the second liquid fluid into a second fluid dosage line connected to the main line and sized to receive at least a predefined second fluid volume by generating a negative pressure therein. In some embodiments, the second liquid fluid is drawn into the second fluid dosage line by means of liquid system fluid. In some embodiments, a gas bubble, e.g. an air bubble, is present in-between the second liquid fluid and the liquid system fluid so as to avoid mixing between the second liquid fluid and the liquid system fluid.

In some embodiments, the process comprises a step of discharging the first and second liquid fluids into at least one fluid chamber connected to the main line by generating a positive pressure in the first and second fluid dosage lines so as to obtain a fluid mixture of the second liquid fluid and the one or more first liquid fluids. In some embodiments, the first and second liquid fluids are simultaneously discharged into the fluid chamber.

In some embodiments, the one or more first liquid fluids are drawn into the first fluid dosage line beyond a first fluid dosage line opening where at least one communication line connected to the main line opens into the first fluid dosage line. In some embodiments, the one or more first liquid fluids are drawn into the first fluid dosage line until the first fluid dosage line opening is reached. In some embodiments, the second liquid fluid is drawn into the second fluid dosage line beyond a second fluid dosage line opening where the at least one communication line opens into the second fluid dosage line. In some embodiments, the second liquid fluid is drawn into the second fluid dosage line until the second fluid dosage line opening is reached.

In some embodiments, the portion of the first liquid fluid located beyond the first fluid dosage line opening is discharged through the first fluid dosage line opening. In some embodiments, the portion of the first liquid is discharged by gaseous or liquid system fluid. In some embodiments, the portion of the first liquid is discharged by liquid system fluid in a manner that there is no gas bubble, e.g. air bubble, present in-between the liquid system fluid and the first liquid fluid remaining in the first fluid dosage line. In some embodiments, in which the one or more first liquid fluids are drawn into the first fluid dosage line until the first fluid dosage line opening is reached, at least a portion of the first fluid dosage line adjacent the first fluid dosage line opening is flooded with liquid system fluid. In some embodiments, the portion of the first fluid dosage line is flooded in a manner that there is no gas bubble, e.g. air bubble, present in-between the liquid system fluid and the first liquid fluid. In some embodiments, the portion of the second liquid fluid located beyond the second fluid dosage line opening is discharged through the second fluid dosage line opening. In some embodiments, the portion of the second liquid is discharged by liquid system fluid. In some embodiments, the portion of the second liquid is discharged by liquid system fluid in a manner that there is no gas bubble, e.g. air bubble, present in-between the liquid system fluid and the second liquid fluid remaining in the second fluid dosage line. In some embodiments, in which the second liquid fluid is drawn into the second fluid dosage line until the second fluid dosage line opening is reached, at least a portion of the second fluid dosage line adjacent the second fluid dosage line opening is flooded with liquid system fluid. In some embodiments, the portion of the second fluid dosage line is flooded in a manner that there is no gas bubble, e.g. air bubble, present in-between the liquid system fluid and the second liquid fluid.

In some embodiments, the fluid mixture is drawn into a fluid retraction line connected to the main line and sized to receive at least a combined volume of the predefined second fluid volume and one or more of the predefined first fluid volumes by generating a negative pressure therein.

In some embodiments, the fluid mixture is discharged into the fluid chamber for mixing with another first liquid fluid which is drawn into the first fluid dosage line and discharged into the fluid chamber. In some embodiments, the at least one communication line is used as fluid retraction line. In some embodiments, the second fluid dosage line is used as fluid retraction line. In some embodiments, the fluid mixture and another first liquid fluid are discharged into the fluid chamber. Specifically, in some embodiments, one first liquid fluid and one second liquid fluid are fed into the main line and drawn into the first and second fluid dosage lines, respectively. The first and second liquid fluids then are discharged into the fluid chamber to obtain a first fluid mixture. The first fluid mixture then is drawn into the fluid retraction line and another first liquid fluid is drawn into the first fluid dosage line. The first fluid mixture and the first liquid fluid then are discharged into the fluid chamber to obtain a second fluid mixture.

The above-described embodiments of the invention may be used alone or in any combination thereof without departing from the scope of the invention.

### BRIEF DESCRIPTION OF THE DRAWINGS

Other and further objects, features and advantages of the invention will appear more fully from the following description. The accompanying drawings, which are incorporated in and constitute a part of the specification, illustrate preferred embodiments of the invention, and together with the general description given above and the detailed description given below, serve to explain the principles of the invention. In the drawings, similar structures are referred to by like numerals throughout the various embodiments.
- FIG. 1: is a schematic drawing illustrating an exemplary microfluidic system of the invention;
- FIGS. 2A-2G: are schematic drawings illustrating an exemplary process for mixing a liquid sample with two reagents in the microfluidic system of FIG. 1.

### DETAILED DESCRIPTION OF THE INVENTION

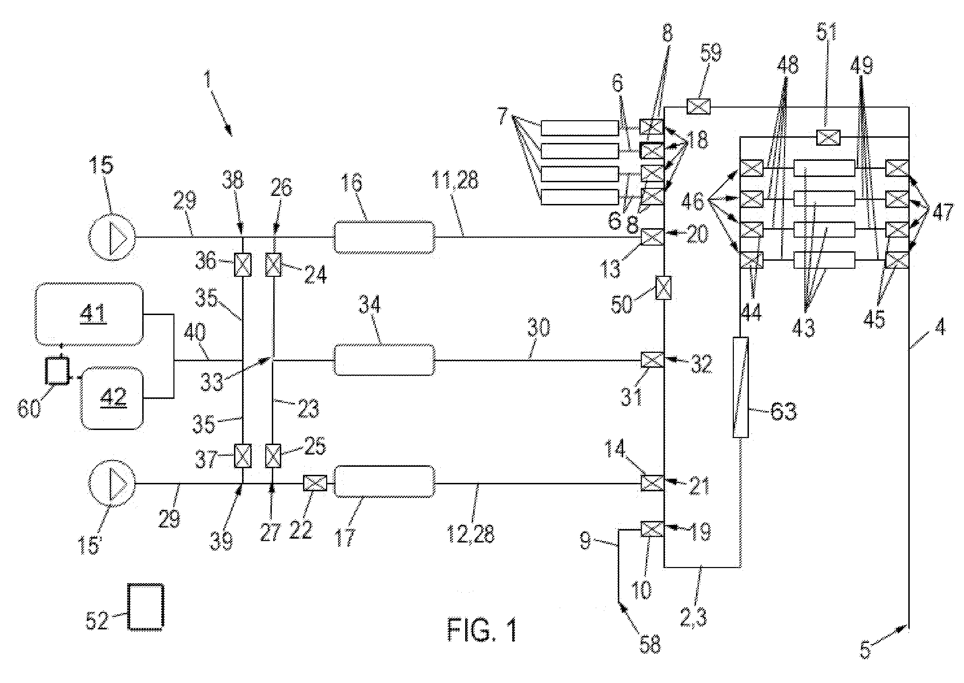

The present invention will be described in detail below with reference to the accompanying drawings. With particular reference to FIG. 1, exemplary embodiments of the microfluidic system according to the invention are explained.

Accordingly, as illustrated in FIG. 1, in some embodiments, the microfluidic system generally referred to at reference numeral 1 includes a main line 2 for conveying liquid fluids which, in some embodiments, is comprised of a first main line portion 3 having a closed-loop configuration and a second main line portion 4 connected to the first main line portion 3. The second main line portion 4 freely opens into a waste fluid port 5 for removing waste fluid.

With reference to FIG. 1, in some embodiments, the microfluidic system 1 includes plural reagent lines 6 which in parallel arrangement with respect to each other are connected to the closed-loop first main line portion 3 for feeding reagents to the main line 2. With continued reference to FIG. 1, in some embodiments, each of the reagent lines 6 has one end which opens into the main line 2 at a reagent line opening 18 while the other end thereof is in fluid communication with a reagent container 7 which can be filled with reagent. The reagent lines 6 are equipped with controllable reagent line valves 8 which can be used to block or release the flow of liquid reagents into the main line 2 which, in some embodiments, are located immediately adjacent the main line 2. The reagent containers 7 may contain reagents which are similar or, more typically, different from each other. While a number of four reagent lines 6 are illustrated in FIG. 1 for the purpose of illustration only, those of skill in the art will appreciate that the microfluidic system 1 may include a number of reagent lines 6 other than four according to the specific demands of the user.

As illustrated in FIG. 1, in some embodiments, the microfluidic system 1 includes a sample line 9 connected to the closed-loop first main line portion 3. With continued reference to FIG. 1, in some embodiments, one end of the sample line 9 opens into the main line 2 through a controllable sample line valve 10 located immediately adjacent the main line 2 while the other end thereof or sample inlet 58 can be brought in fluid communication with a sample vessel (not illustrated) for containing a liquid sample to be tested. The sample line 9 opens into the main line 2 at a sample line opening 19. The sample line valve 10 can be used to block or release the flow of liquid sample into the main line 2. While only one sample line 9 is illustrated in FIG. 1 for the purpose of illustration only, those of skill in the art will appreciate that the microfluidic system 1 may also include more than one sample line 9.

As illustrated in FIG. 1, in some embodiments, the microfluidic system 1 includes two dosage lines for dosing liquid fluids comprised of one reagent dosage line 11 and one sample dosage line 12. Specifically, with continued reference to FIG. 1, in some embodiments, one end of the reagent dosage line 11 opens into the first main line portion 3 through a controllable first dosage line valve 13 located immediately adjacent the main line 2 while the other end thereof is connected to a first fluid pump 15. The reagent dosage line 11 opens into the main line 2 at a reagent dosage line opening 20. As illustrated in FIG. 1, in some embodiments, the reagent dosage line opening 20 is located between the reagent line openings 18 and the sample line opening 19. The first dosage line valve 13 can be used to block or release the flow of liquid fluid between the reagent dosage line 11 and the main line 2. The first fluid pump 15 can be used to generate a positive or negative pressure in the reagent dosage line 11 to suck liquid fluid into or to discharge liquid fluid out of the reagent dosage line 11.

In some embodiments, the reagent dosage line 11 is sized to receive at least a predefined first fluid volume, which in some embodiments is a predefined (dosing) volume of the one or more reagents. As illustrated in FIG. 1, in some embodiments, the reagent dosage line 11 includes a reagent dosage space 16 which in some embodiments is sized to essentially receive the predefined first fluid volume. In some embodiments, the reagent dosage space 16 is formed by rolled-up tubing.

Specifically, as illustrated in FIG. 1, in some embodiments, one end of the sample dosage line 12 opens into the first line portion 3 through a controllable second dosage line valve 14 located immediately adjacent the main line 2 while the other end thereof is fluidically connected to a first fluid pump 15'.

In some embodiments, the first fluid pump 15' is different from the first fluid pump 15. In some embodiments, the first fluid pump 15' is similar to the first fluid pump 15. In some embodiments, the first fluid pump 15 and the first fluid pump 15' are embodied as one (single) fluid pump. In some embodiments, each of the reagent and sample dosage lines 11, 12 is fluidically connected to one fluid pump via a valve (not illustrated) for blocking or releasing liquid fluid flow between the dosage line and the fluid pump.

In some embodiments, the first fluid pumps 15, 15' are adapted for pumping liquid fluids. In some embodiments, the first fluid pumps 15, 15' are adapted for pumping gaseous fluids. In some embodiments, the first fluid pumps 15, 15' are adapted for pumping liquid and gaseous fluids. The first fluid pumps 15, 15' can be embodied as continuous or discontinuous pumps such as pumps of the membrane pump type, syringe pump type, rotary displacement pump type and bellow pump type. Pumps of the bellow pump type, e.g., are disclosed in US-patent No. 5,638,986. In some embodiments, the first fluid pumps 15, 15' are pumps of the rotary displacement pump type such as gearwheel pumps.

With continued reference to FIG. 1, the sample dosage line 12 opens into the main line 2 at a sample dosage line opening 21. As further illustrated in FIG. 1, in some embodiments, the sample dosage line opening 21 is located between the reagent dosage line opening 20 and the sample line opening 19. The second dosage line fluid valve 14 can be used to block or release the flow of liquid fluid between the sample dosage line 12 and the main line 2. The first fluid pump 15' can be used to generate a positive or negative pressure in the sample dosage line 12 to suck liquid fluid in or to discharge liquid fluid out of the sample dosage line 12.

In some embodiments, the sample dosage line 12 is sized to receive at least a predefined sample (dosing) volume of the sample. With yet continued reference to FIG. 1, in some embodiments, the sample dosage line 12 includes a sample dosage space 17 for receiving the sample. In some embodiments, the sample dosage space 17 is sized to essentially receive the predefined sample volume. In some embodiments, the sample dosage space 17 is formed by rolled-up tubing.

As further illustrated in FIG. 1, in some embodiments, the sample dosage line 12 is equipped with a controllable third dosage line valve 22 located between the first fluid pump 15'-connected end and the sample dosage space 17 of the sample dosage line 12.

With continued reference to FIG. 1, in some embodiments, the microfluidic system 1 includes a first communication line 23 fluidically connecting the reagent dosage line 11 and the sample dosage line 12. As illustrated, in some embodiments, the first communication line 23 is equipped with a controllable first communication line valve 24 for blocking or releasing liquid fluid flow between the first communication line 23 and the reagent dosage line 11 and a controllable second communication line valve 25 for blocking or releasing liquid fluid flow between the first communication line 23 and the sample dosage line 12. Particularly, one end of the first communication line 23 opens into the reagent dosage line 11 at a first communication line opening 26 while the other end thereof opens into the sample dosage line 12 at a second communication line opening 27. Accordingly, the reagent and sample dosage lines 11, 12 respectively are comprised of a first dosage line portion 28 and a second dosage line portion 29 on either side of the first and second communication line openings 26, 27, respectively, wherein the second dosage line portions 29 communicate with the main line 2 via the first dosage line portions 28. Specifically, in some embodiments, the first dosage line portion 28 of the reagent dosage line 11 is sized to receive at least the predefined first fluid volume while the first dosage line portion 28 of the sample dosage line 12 is sized to receive at least the predefined second fluid volume.

As further illustrated in FIG. 1, in some embodiments, the first communication line 23 is connected to the main line 2 through a second communication line 30. In some embodiments, one end of the second communication line 30 opens into the first main line portion 3 through a controllable third communication line valve 31 located adjacent the main line 2 for blocking or releasing liquid fluid flow between the second communication line 30 and the main line 2 while the other end thereof is connected to the first communication line 23. Stated more particularly, one end of the second communication line 30 opens into the main line 2 at a third communication line opening 32 while the other end thereof opens into the first communication line 23 at a fourth communication line opening 33. In some embodiments, the third communication line opening 32 is located between the reagent dosage line opening 20 and the sample dosage line opening 21 while the fourth communication line opening 33 is located between the first and second communication line openings 26, 27.

In some embodiments, the second communication line 30 is sized to receive at least a combined fluid volume of the predefined second fluid volume and one or more of the predefined first fluid volumes. With yet continued reference to FIG. 1, in some embodiments, the second communication line 30 includes a mixed fluid dosage space 34 for receiving mixed fluids such as sample/reagent(s)-mixtures. In some embodiments, the mixed fluid dosage space 34 is formed by rolled-up tubing.

As further illustrated in FIG. 1, in some embodiments, the system 1 includes a system fluid line 35 connected to the reagent and sample dosage lines 11, 12, respectively, for feeding or removing liquid and/or gaseous system fluid. With continued reference to FIG. 1, in some embodiments, the system fluid line 35 is connected to the reagent dosage line 11 via a controllable first system fluid line valve 36 located adjacent the reagent dosage line 11 for blocking or releasing liquid fluid flow between the system fluid line 35 and the reagent dosage line 11 and connected to the sample dosage line 12 via a controllable second system fluid line valve 37 located adjacent the sample dosage line 12 for blocking or releasing liquid fluid flow between the system fluid line 35 and the sample dosage line 12. Particularly, one end of the system fluid line 35 opens into the second line portion 29 of the reagent dosage line 11 at a first system fluid line opening 38 while the other end thereof opens into the second line portion 29 of the sample dosage line 12 at a second system fluid line opening 39. As illustrated in FIG. 1, in some embodiments, the first system fluid line opening 38 is located between the first fluid pump 15 and the first communication line opening 26 while the second system fluid line opening 39 is located between the first fluid pump 15' and the second communication line opening 27.

As further illustrated in FIG. 1, in some embodiments, the system fluid line 35 is in fluid communication with both a first reservoir 41 for containing liquid system fluid and a second reservoir 42 for containing gaseous system fluid such as air or nitrogen (N₂) by means of connecting line 40. In some embodiments, the first and second reservoirs 41, 42 are operatively coupled to a second fluid pump 60 adapted for pumping liquid and gaseous system fluids. The second fluid pump 60 can be embodied as continuous or discontinuous pump such as a pump of the membrane pump type, syringe pump type, rotary displacement pump type and bellow pump type. In some embodiments, the first fluid pumps 15, 15' are different from the second fluid pump 60. In some embodiments, the first fluid pumps 15, 15' are based on a more precise pump technology than the second fluid pump 60. In some embodiments, the first fluid pumps 15, 15' are operatively coupled to the first reservoir 41 containing liquid system fluid for transferring liquid system fluid between the first reservoir 41 and the reagent and sample dosage lines 11, 12, respectively.

As illustrated in FIG. 1, in some embodiments, the microfluidic system 1 includes plural fluid chambers 43 for receiving liquid fluids which, in some embodiments, are in parallel arrangement with and connected to the main line 2 through first and second fluid chamber lines 48, 49, respectively. In some embodiments, the first and second fluid chamber lines 48, 49 are equipped with controllable first and second fluid chamber valve 44, 45 located immediately adjacent the main line 2 for blocking or releasing liquid fluid flow between the main line 2 and the fluid chambers 43. Particularly, in some embodiments, one end of each of the first fluid chamber lines 48 opens into the closed-loop first main line portion 3 while the other end thereof communicates with the fluid chamber 43. In some embodiments, one end of each of the second fluid chamber lines 49 opens into the second line portion 4 while the other end thereof communicates with the fluid chamber 43. As illustrated in FIG. 1, in some embodiments, the second fluid chamber openings 47 are located between the first fluid chamber openings 46 and the waste fluid port 5 while the first fluid chamber openings 46 are located between the second fluid chamber openings 47 and the sample line opening 19. While a number of four fluid chambers 43 are illustrated in FIG. 1 for the purpose of illustration only, those of skill in the art will recognize that more or less fluid chambers 43 can be envisaged according to the specific demands of the user.

In some embodiments, each of the fluid chambers 43 is sized to receive at least a combined fluid volume of the predefined second fluid volume and one or more of the predefined first fluid volumes so as to receive mixtures of the sample and one or more reagents. In some embodiments, the fluid chambers 43 are adapted for incubating sample/reagent mixtures. In some embodiments, the fluid chambers 43 are adapted for reacting sample/reagent mixtures. In some embodiments, the fluid chambers 43 are adapted for detecting reaction products obtained from sample/reagent mixtures.

As illustrated in FIG. 1, in some embodiments, the closed-loop first main line portion 3 is further equipped with a first main line valve 50 located in-between the reagent dosage line opening 20 and the third communication line opening 32, a second main line valve 51 located in-between the first and second fluid chamber valves 44, 45 and a third main line valve 59 located in-between the reagent line valves 8 and the second fluid chamber valves 45. The first to third main line valves 50, 51, 59 can be used for blocking or releasing liquid fluid flow through the main line 2.

As illustrated in FIG. 1, in some embodiments, the closed-loop first main line portion 3 is yet further equipped with a static mixer 63 which can be used for passively mixing liquid fluids passing therethrough. In some embodiments, the mixer 63 is located between the first fluid chamber openings 46 and the sample line opening 19.

With continued reference to FIG. 1, in some embodiments, the microfluidic system 1 further includes a controller 52 set up to control the activity of the first and second fluid pumps 15, 15', 60 and various valves in order to mix the sample with one or more reagents. The controller 52 can, e.g., be embodied as programmable logic controller running a computer-readable program. Basically, the controller 52 is electrically connected to all system components which require control and/or provide information.

In the microfluidic system 1, in some embodiments, at least some of the controllable valves are configured as freeze-thaw valves. By use of freeze-thaw valves, fluid flow can be controlled by freezing and thawing liquid fluid contained in a flow line. Stated more particularly, in the valve open state, liquid and gaseous fluid can pass through the freeze-thaw valve. In a first valve closed state, while gaseous fluid can pass through the freeze-thaw valve, the valve is sufficiently cooled to generate a frozen plug in case of presence of liquid fluid so that the first valve closed state can be changed into a second valve closed state. In the second valve closed state, freeze-thaw valves rely on the resistance to shearing motion that is obtained between the resulting frozen plug and the line wall to thereby restrict fluid flow. In combination with freeze-thaw valves, flow lines can be used for transiently keeping (i.e. registering) and providing a fluid in a predefined place without having a gas bubble between the valve and the liquid fluid.

Specifically, in the microfluidic system 1, in some embodiments, one or more valves selected from the group of valves consisting of the reagent line valves 8, the sample line valve 10, the first and second dosage line valves 13, 14 and the first and second fluid chamber valves 44, 45, in particular all valves of the former group of valves, are configured as freeze-thaw valves while the remaining valves are non-freeze-thaw valves, in particular, valves adapted for good flow-through-washing in the valve open state by having large open diameters.

In some embodiments, the microfluidic system 1 can contain more than one reagent dosage line 11 for dosing reagents fluidically communicating with the first communication line 23 which can be sized to receive similar or different predefined first fluid volumes.

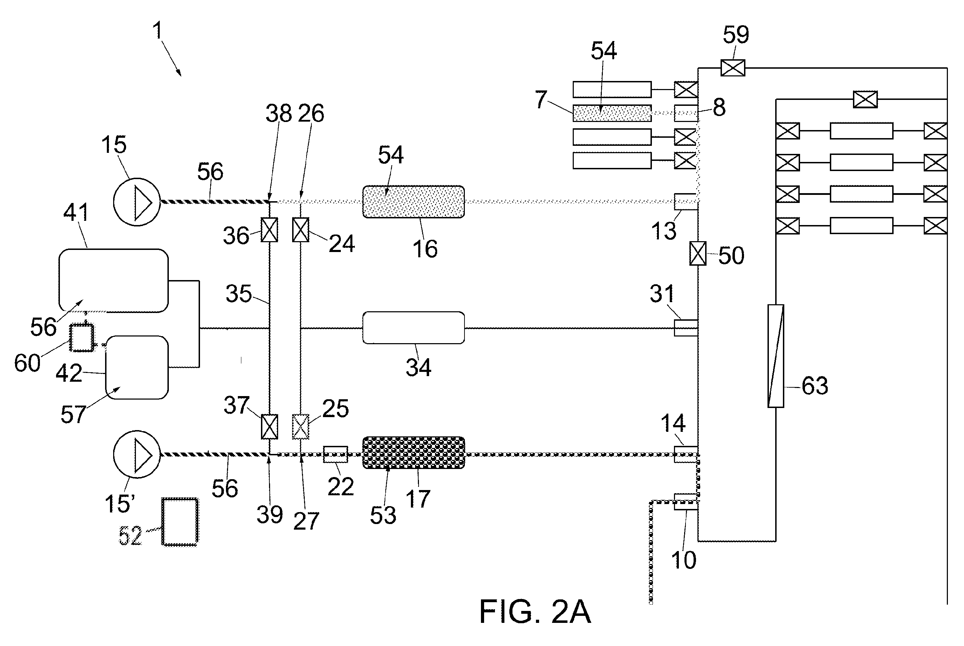

With particular reference to FIGS. 2A to 2G, exemplary embodiments of the process of the invention for mixing liquid fluids using the microfluidic structure 1 of FIG. 1 are explained. Specifically, the microfluidic structure 1 is used for mixing one sample 53 with two reagents 54, 55. In the various figures, a fluid valve in the valve closed state blocking fluid flow is depicted with a cross. Otherwise, a fluid valve in the valve open state enabling fluid flow is depicted without cross.

Prior to initiating the process, the microfluidic system 1 is thoroughly washed with liquid system fluid 56 contained in the first reservoir 41 by operating the second fluid pump 60. After washing the system 1 with liquid system fluid, the system 1 is dried with gaseous system fluid 57 which is contained in the second reservoir 42. In some embodiments, in the beginning of the process, at least some of the various lines of the microfluidic system 1, especially the main line, are in a dried condition and filled with gaseous system fluid 57.

With particular reference to FIG. 2A, the process begins with the uptake of a sample 53 and a first reagent 54. Specifically, the sample line valve 10, the second dosage line valve 14 and the third dosage line valve 22 are brought in the valve open state. Then, the first fluid pump 15' is operated to perform a suction action so as to generate a negative pressure in the sample dosage line 12 for sucking the sample 53 into the sample dosage line 12. With continued reference to FIG. 2A, in some embodiments, the sample 53 is drawn beyond the second communication line opening 27 and, in some embodiments, is stopped in a position between the second system fluid line opening 39 and the second communication line opening 27. In some embodiments, the sample 53 is drawn into the sample dosage line 12 until it reaches the second communication line opening 27 but not beyond the second communication line opening 27. In some embodiments, liquid system fluid 56 is used to draw the sample 53 into the sample dosage line 12 wherein a small gas bubble (e.g. air bubble) is present in-between the liquid system fluid 56 and the sample 53 so as to avoid mixing between the liquid system fluid 56 and the sample 53.

Further, one of the reagent line valves 8 and the first dosage line valve 13 are brought in the valve open state. Then, the first fluid pump 15 is operated to perform a suction action so as generate a negative pressure in the reagent dosage line 11 for sucking the first reagent 54 into the reagent dosage line 11. With continued reference to FIG. 2A, in some embodiments, the first reagent 54 is drawn beyond the first communication line opening 26 and, in some embodiments, is stopped in a position between the first system fluid line opening 38 and the first communication line opening 26. In some embodiments, the first reagent 54 is drawn into the reagent dosage line 11 until it reaches the first communication line opening 26 but not beyond the first communication line opening 26. In some embodiments, liquid system fluid 56 is used to draw the first reagent 54 into the reagent dosage line 11 wherein a small gas bubble (e.g. air bubble) is present in-between the liquid system fluid 56 and the first reagent 54 so as to avoid mixing between the liquid system fluid 56 and the first reagent 54.

While sucking the sample 53 and the first reagent 54 into the sample and reagent dosage lines 12, 11, respectively, the remaining valves of the microfluidic system 1 except for the third communication line valve 31 are in the valve closed state so as to block liquid fluid flow therethrough.

In some embodiments, the sample 53 and the first reagent 54 are simultaneously sucked into the sample and reagent dosage lines 11, 12, respectively. Accordingly, in some embodiments, the fluid pumps 15, 15' are simultaneously operated to perform a suction action. Otherwise, in some embodiments, the sample 53 and the first reagent 54 are consecutively sucked into the sample and reagent dosage lines 11, 12, respectively, by consecutively operating the first fluid pumps 15, 15'. In case of having only one fluid pump, in some embodiments, a negative pressure can selectively be generated in the sample and reagent dosage lines 12, 11, respectively, by opening or closing respective fluid valves (not illustrated) via which each of the sample and reagent dosage lines 12, 11 are connected to the fluid pump as above-detailed. Alternatively, in case of having only one fluid pump, in some embodiments, a negative pressure can selectively be generated in the sample and reagent dosage lines 12, 11, respectively, by opening or closing the third dosage line valve 22.

As-above detailed, although various lines of the microfluidic system 1 can be filled with liquid system fluid 56 before beginning the process, in some embodiments, the main line 2 is filled with gaseous system fluid 57 so that a small gas bubble typically will be present in-between the liquid system fluid 56 and both the sample 53 and the first reagent 54 contained in the sample and reagent dosage lines 12, 11, respectively.

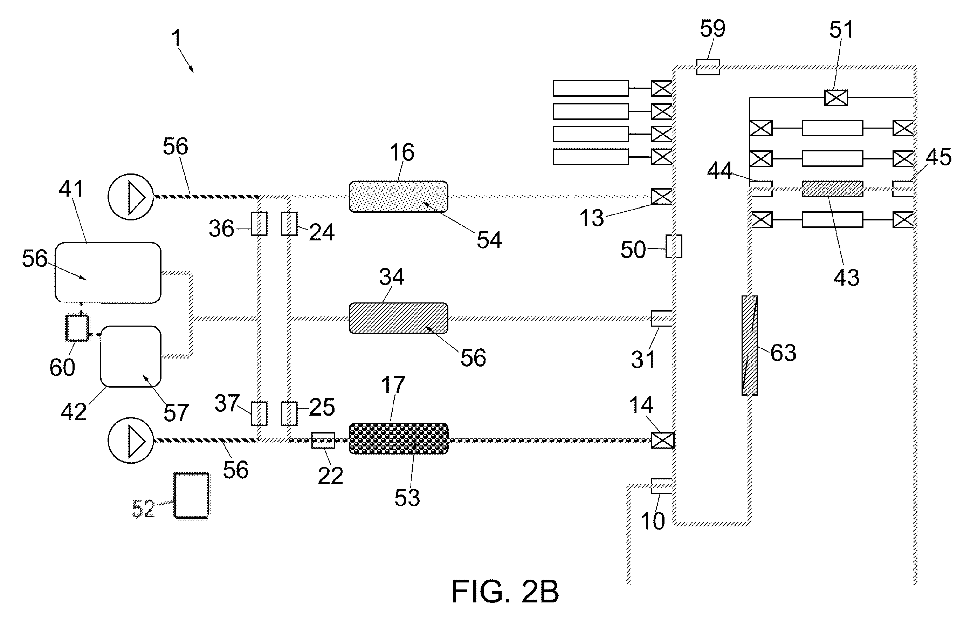

With reference to FIG. 2B, in some embodiments, the opened reagent line valve 8 is closed to block further flow of first reagent 54. Furthermore, the first and second dosage line valves 13, 14 are brought in the valve closed state to block liquid fluid flow between the sample and reagent dosage lines 12, 11 and the main line 2. Otherwise, with continued reference to FIG. 2B, in some embodiments, the first and second system fluid line valves 36, 37, the first and second communication line valves 24, 25, the first and third main line valves 51, 59 and one pair of first and second fluid chamber valves 44, 45 belonging to one fluid chamber 43 are brought in the valve open state to enable liquid fluid to pass therethrough. The remaining valves are kept in their respective states.

With continued reference to FIG. 2B, in some embodiments, liquid system fluid 56 then is pumped into the connecting line 40 by operating the second fluid pump 60 so as to perform a liquid system fluid 56 discharging action. Due to the opened valves, the liquid system fluid 56 is pumped into the connecting line 40 and the system fluid line 35 which then enters the second dosage line portions 29 of the reagent and sample dosage line 11, 12, respectively, and leaves the reagent and sample dosage lines 11, 12 through the first communication line 23. From the first communication line 23 the liquid system fluid 56 is conveyed into the second communication line 30 and into the main line 2. The liquid system fluid 56 can leave the main line 2 at the waste fluid port 5 passing both through the fluid chamber 43 having opened first and second fluid chamber valves 44, 45 and the third main line valve 59. The liquid system fluid 56 also leaves the main line 2 via the sample inlet 58. Accordingly, a major part of the microfluidic system 1, especially those portions which have been used for up-taking the sample 53 and the first reagent 54 as well as those portions which will be used next, can readily be washed with liquid system fluid 56 in one single washing step.

With yet continued reference to FIG. 2B, in some embodiments, due to washing with liquid system fluid 56, the sample 53 fills the sample dosage line 12 from a position at the second communication line opening 27 to a position at the sample dosage line opening 21 without having a gas bubble in-between the sample 53 and the liquid system fluid 56. Furthermore, in some embodiments, the first reagent 54 fills the reagent dosage line 11 from a position at the first communication line opening 26 to a position at the reagent dosage line opening 20 without having a gas bubble between the first reagent 54 and the liquid system fluid 56. Because of the reagent and sample dosage spaces 16, 17 there is only very little fluidic contact to the liquid system fluid 56. Otherwise, highly-definite volumes of the sample 53 and the first reagent 54 are contained in the sample and reagent dosage lines 12, 11, respectively. Accordingly, very precise dosing of both the sample 53 and the first reagent 54 is enabled.

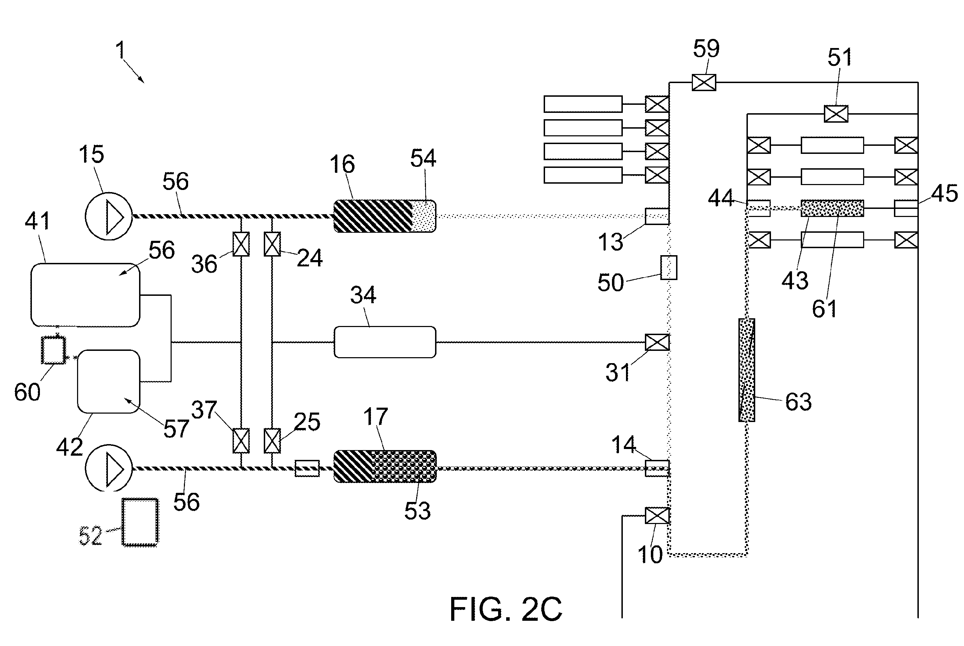

With reference to FIG. 2C, in some embodiments, the first and second system fluid line valves 36, 37, the first and second communication line valves 24, 25, the sample line valve 10, the third communication line valve 31 and the third main line valve 59 are brought in the valve closed state. Otherwise, the first and second dosage line valves 13, 14 are brought in the valve open state. The remaining valves are kept in their respective states. Then, the first fluid pumps 15, 15' are operated to pump liquid system fluid 56 into the reagent and sample dosage lines 11, 12 so as to generate a positive pressure therein in order to discharge dosed volumes of the sample 53 and the first reagent 54 into the main line 2 and to fill the fluid chamber 43 having opened first and second fluid chamber valves 44, 45. In some embodiments, the sample 53 and the first reagent 54 are consecutively discharged from the sample and reagent dosage lines 11, 12, respectively. With continued reference to FIG. 2C, in some embodiments, the sample 53 and the first reagent 54 are simultaneously discharged from the sample and reagent dosage lines 11, 12, respectively. Mixing of the sample 53 and the first reagent 54 can be obtained by simultaneous discharging from the sample and reagent dosage lines 11, 12. Otherwise, mixing of the sample 53 and the first reagent 54 can be obtained by action of the static mixer 63 flown-through by both the sample 53 and the first reagent 54. Accordingly, the fluid chamber 54 is filled with a first sample/reagent mixture 61.

In some embodiments, the sample 53 and/or the first reagent 54 are completely discharged from the sample and/or reagent dosage lines 11, 12, respectively. In some embodiments, the sample 53 and/or the first reagent 54 are partially discharged from the sample and/or reagent dosage lines 11, 12, respectively by stopping operating the first fluid pumps 15, 15' and/or by closing the first and second dosage line valves 13, 14, respectively. In some embodiments, the sample 53 and/or the first reagent 54 are partially discharged from the sample and/or reagent dosage lines 11, 12, respectively, so as to not discharge a (very) little portion thereof having been mixed with liquid system fluid 56.

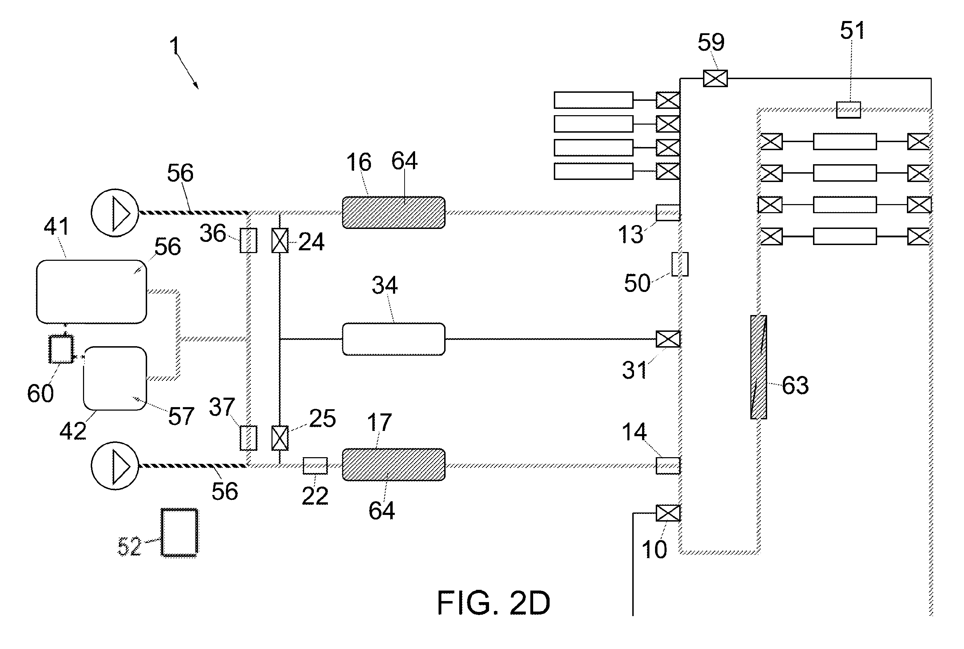

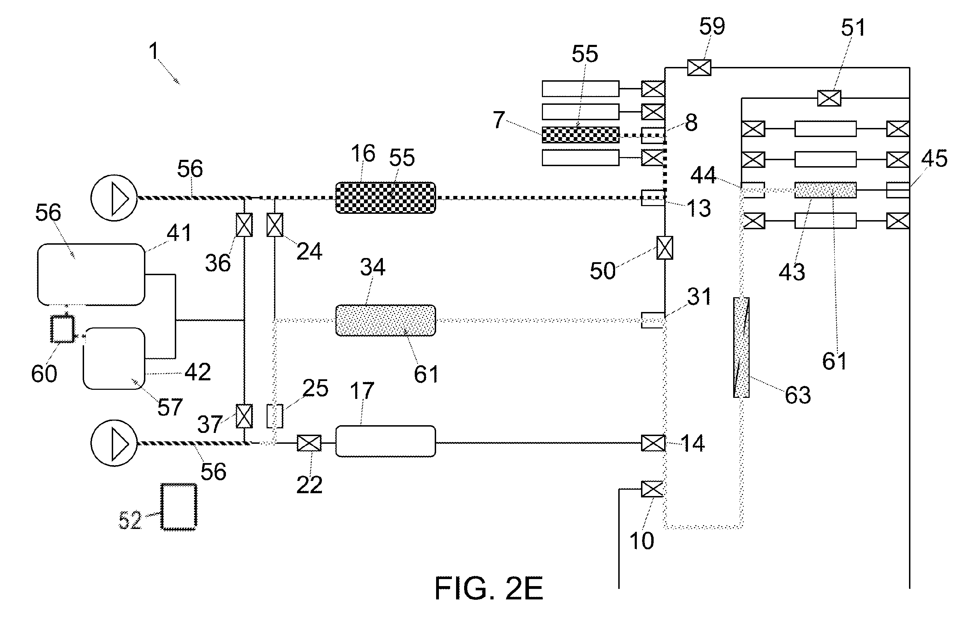

With reference to FIG. 2D, in some embodiments, the first and second fluid chamber valves 44, 45 are brought in the valve closed state. Otherwise, the first and second system fluid line valves 36, 37 and the second main line valve 51 are brought in the valve open state. The remaining valves are kept in their respective states. In some embodiments, liquid system fluid 56 is pumped into the connecting line 40 by operating the second fluid pump 60. With continued reference to FIG. 2D, in some embodiments, a system fluid mixture 64 comprised of the liquid system fluid 56 and the gaseous system fluid 57 is pumped into the connecting line 40 by operating the second fluid pump 60. Due to the opened valves, the liquid system fluid 56 and the system fluid mixture 64, respectively, is conveyed into the connecting line 40 and the system fluid line 35 which enters the reagent and sample dosage lines 11, 12, and then is discharged through the waste fluid port 5 via the main line 2. Accordingly, the reagent and sample dosage lines 11, 12 and a major part of the main line 2 can readily be washed in one single washing step. Furthermore, a highly-definite volume of the first sample/reagent mixture 61 is contained in the fluid chamber 43 and the first and second fluid chamber lines 48, 49. With reference to FIG. 2E, in some embodiments, the first and second main line valve 50, 51, the second dosage line valve 14, and the first and second system fluid line valves 36, 37 are brought in the valve closed state. Otherwise, the first and second fluid chamber valves 44, 45, the second and third communication line valves 25, 31 are brought in the valve open state. Furthermore, another one of the reagent line valves 8 belonging to another reagent container 7 is brought in the valve open state. The remaining valves are kept in their respective states.

Then, in some embodiments, the first fluid pump 15 is operated to perform a suction action so as generate a negative pressure in the reagent dosage line 11 for sucking a second reagent 55 into the reagent dosage line 11. With continued reference to FIG. 2E, in some embodiments, the second reagent 55 is drawn beyond the first communication line opening 26 and, in some embodiments, is stopped in a position between the first system fluid line opening 38 and the first communication line opening 26. In some embodiments, the second reagent 55 is drawn into the reagent dosage line 11 until it reaches the first communication line opening 26 but not beyond the first communication line opening 26. In some embodiments, liquid system fluid 56 is used to draw the second reagent 55 into the reagent dosage line 11 wherein a small gas bubble (e.g. air bubble) is present in-between the liquid system fluid 56 and the second reagent 55 so as to avoid mixing between the liquid system fluid 56 and the second reagent 55. Furthermore, in some embodiments, the first fluid pump 15' is operated to perform a suction action so as to generate a negative pressure in the sample dosage line 12 for sucking the first sample/reagent mixture 61 into the second communication line 30, partially into the first communication line 23 and partially into the sample dosage line 12. With continued reference to FIG. 2E, in some embodiments, the first sample/reagent mixture 61 is drawn beyond the second communication line opening 27 and, in some embodiments, is stopped in a position between the second system fluid line opening 39 and the second communication line opening 27.

In some embodiments, the first sample/reagent mixture 61 and the second reagent 55 are simultaneously sucked into the respective lines. Accordingly, in some embodiments, the first fluid pumps 15, 15' are simultaneously operated to perform a suction action. Otherwise, in some embodiments, the first sample/reagent mixture 61 and the second reagent 55 are consecutively sucked into the respective lines by consecutively operating the first fluid pumps 15, 15'.

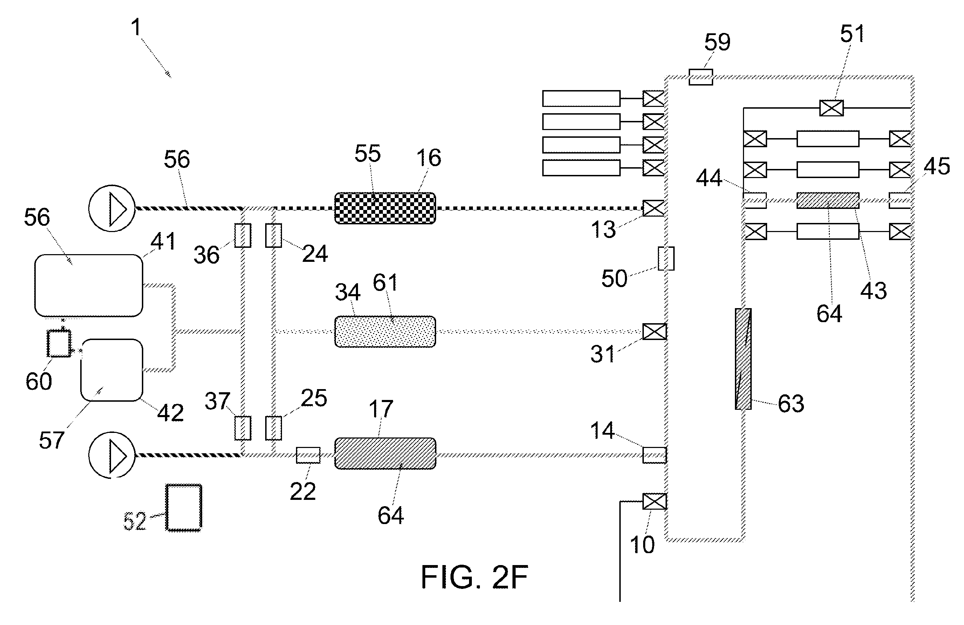

With reference to FIG. 2F, in some embodiments, the opened reagent line valve 8, the first dosage line valve 13 and the third communication line valve 31 are brought in the valve closed state. Otherwise, the first main line valve 50, the third main line valve 59, the second dosage line valve 14, the third dosage line valve 22, the first communication line valve 24 and the first and second system fluid line valves 36, 37 are brought in the valve open state. The remaining valves are kept in their respective states.

In some embodiments, liquid system fluid 56 is pumped into the connecting line 40 by operating the second fluid pump 60 so as to perform a liquid system fluid 56 discharging action. With continued reference to FIG. 2F, in some embodiments, a system fluid mixture 64 comprised of the liquid system fluid 56 and the gaseous system fluid 57 is pumped into the connecting line 40 by operating the second fluid pump 60. Due to the opened valves, the liquid system fluid 56 and the system fluid mixture 64, respectively, is conveyed into the connecting line 40 and the system fluid line 35 which enters the second dosage line portions 29 of the reagent and sample dosage line 11, 12, respectively, and leaves the reagent and sample dosage lines 11, 12 through the first communication line 23. From the first communication line 23, the liquid system fluid 56 and the system fluid mixture 64, respectively, is conveyed into the reagent dosage line 12 and the main line 2. The liquid system fluid 56 and the system fluid mixture 64, respectively, can leave the main line 2 at the waste fluid port 5 passing both through that fluid chamber 43 having opened first and second fluid chamber valves 44, 45 and the third main line valve 59. Accordingly, a major part of the microfluidic system 1, especially the fluid chamber 43 used for receiving the first sample/reagent mixture 61, can readily be washed in one single washing step.

With yet continued reference to FIG. 2F, in some embodiments, due to washing with liquid system fluid 56 and the system fluid mixture 64, respectively, the first sample/reagent mixture 61 fills the second communication line 30 from a position at the third communication line opening 32 to a position at the fourth communication line opening 33 without having a gas bubble in-between the first sample/reagent mixture 61 and the liquid system fluid 56 and the system fluid mixture 64, respectively. Otherwise, in some embodiments, the second reagent 55 fills the reagent dosage line 11 from a position at the first communication line opening 26 to a position at the reagent dosage line opening 20 without having a gas bubble between the second reagent 55 and the liquid system fluid 56. Accordingly, very precise dosing of the first sample/reagent mixture 61 and the second reagent 55 is enabled.

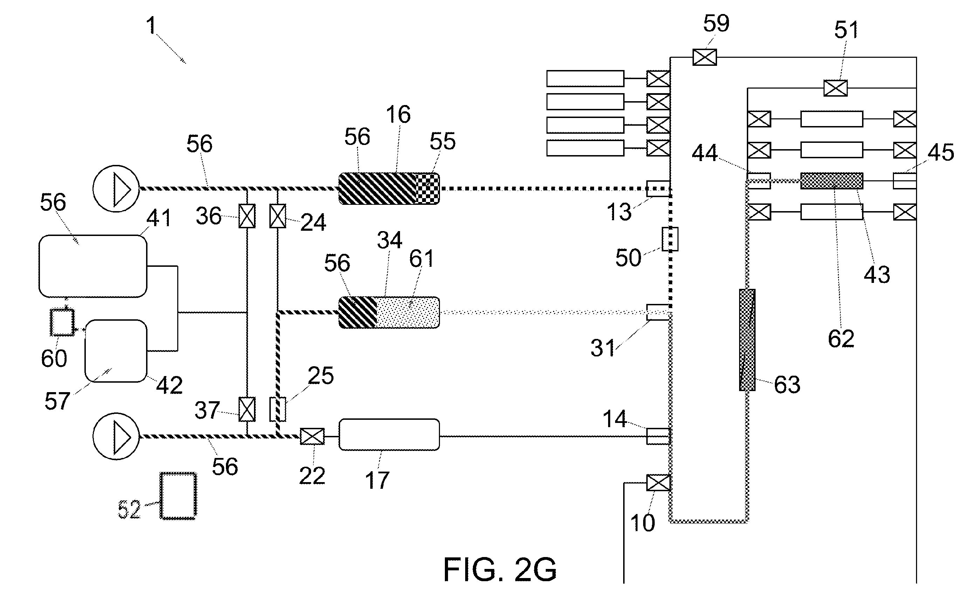

With reference to FIG. 2G, in some embodiments, the third main line valve 59, the third dosage line valve 22, the first and second system fluid line valves 36, 37 and the first communication line valve 24 are brought in the valve closed state. Otherwise, the first dosage line valve 13 and the third communication line valve 31 are brought in the valve open state. The remaining valves remain in their respective states.

Then, in some embodiments, the first fluid pumps 15, 15' are operated to pump liquid system fluid 56 into the second communication line 30 and the reagent dosage line 11, respectively, so as to generate a positive pressure therein to discharge dosed volumes of the first sample/reagent mixture 61 and the second reagent 55 into the main line 2 in order to fill the fluid chamber 43 having opened first and second fluid chamber valves 44, 45. In some embodiments, the first sample/reagent mixture 61 and the second reagent 55 are consecutively discharged from the second communication line 30 and the reagent dosage line 11, respectively. With continued reference to FIG. 2G, in some embodiments, the first sample/reagent mixture 61 and the second reagent 55 are simultaneously discharged from the second communication line 30 and the reagent dosage line 11, respectively. Mixing of the first sample/reagent mixture 61 and the second reagent 55 can be obtained by simultaneous discharging of the respective lines. Otherwise, mixing of the first sample/reagent mixture 61 and the second reagent 55 can be obtained by action of the static mixer 52. Accordingly, the fluid chamber 43 is filled with a second sample/reagent mixture 62. In some embodiments, the first sample/reagent mixture 61 and/or the second reagent 55 are completely discharged from the second communication line 30 and the reagent dosage line 11, respectively. In some embodiments, the first sample/reagent mixture 61 and/or the second reagent 55 are partially discharged from the second communication line 30 and the reagent dosage line 11, respectively, by stopping operating the first fluid pumps 15, 15' and/or by closing the first dosage line valve 13 and the third communication line valve 31, respectively. In some embodiments, the first sample/reagent mixture 61 and/or the second reagent 55 are partially discharged from the second communication line 30 and the reagent dosage line 11, respectively, so as to not discharge a little portion having been mixed with liquid system fluid 56.

The second sample/reaction mixture 62 of the sample 53 and the first and second reagents 54, 55 can be used for further processing such as for incubating and/or reacting the second sample/reagent mixture 62 and/or for detecting reaction products obtained from the second sample/reagent mixture 62.

Accordingly, the sample 53 can be mixed with the first and second reagents 54, 55 without undesired dilution by the liquid system fluid 56. Otherwise, various fluids can very precisely be discharged into the fluid chamber 43 due to removing gas bubbles between the fluids and liquid system fluid 56. Both the reagent and sample dosage lines 11, 12 as well as the fluid chambers 43 can be washed in a flow-through manner in one washing step. Otherwise, the fluid chambers 43 can be fluidically separated from the reagent and sample dosage lines 11, 12 for selective washing.

Obviously many modifications and variations of the present invention are possible in light of the above description. It is therefore to be understood, that within the scope of appended claims, the invention may be practiced otherwise than as specifically devised.

### Reference list

- 1: System
- 2: Main line
- 3: First main line portion
- 4: Second main line portion
- 5: Waste fluid port
- 6: Reagent line
- 7: Reagent container
- 8: Reagent line valve
- 9: Sample line
- 10: Sample line valve
- 11: Reagent dosage line
- 12: Sample dosage line
- 13: First dosage line valve
- 14: Second dosage line valve
- 15, 15': First fluid pump
- 16: Reagent dosage space
- 17: Sample dosage space
- 18: Reagent line opening
- 19: Sample line opening
- 20: Reagent dosage line opening
- 21: Sample dosage line opening
- 22: Third dosage line valve
- 23: First communication line
- 24: First communication line valve
- 25: Second communication line valve
- 26: First communication line opening
- 27: Second communication line opening
- 28: First dosage line portion
- 29: Second dosage line portion
- 30: Second communication line
- 31: Third communication line valve
- 32: Third communication line opening
- 33: Fourth communication line opening
- 34: Mixed fluid dosage space
- 35: System fluid line
- 36: First system fluid line valve
- 37: Second system fluid line valve
- 38: First system fluid line opening
- 39: Second system fluid line opening
- 40: Connecting line
- 41: First reservoir
- 42: Second reservoir
- 43: Fluid chamber
- 44: First fluid chamber valve
- 45: Second fluid chamber valve
- 46: First fluid chamber opening
- 47: Second fluid chamber opening
- 48: First fluid chamber line
- 49: Second fluid chamber line
- 50: First main line valve
- 51: Second main line valve
- 52: Controller
- 53: Sample
- 54: First reagent
- 55: Second reagent
- 56: Liquid system fluid
- 57: Gaseous system fluid
- 58: Sample inlet
- 59: Third main line valve
- 60: Second fluid pump
- 61: First sample/reagent mixture
- 62: Second sample/reagent mixture
- 63: Mixer
- 64: System fluid mixture

## Claims

1. A microfluidic system (1) for mixing liquid fluids, comprising:
a main line (2);
one or more first feed lines (6) for feeding one or more first liquid fluids to said main line (2), said first feed lines (6) being connected to said main line (2) and equipped with controllable first feed line valves (8) for blocking or releasing liquid fluid flow to said main line (2);
at least one second feed line (9) for feeding a second liquid fluid to said main line (2), said second feed line (9) being connected to said main line (2) and equipped with a controllable second feed line valve (10) for blocking or releasing liquid fluid flow to said main line (2);
two or more dosage lines (11, 12) for dosing liquid fluids, said dosage lines (11, 12) being connected to said main line (2) and equipped with controllable dosage line valves (13, 14) for blocking or releasing liquid fluid flow between said dosage lines (11, 12) and said main line (2), said dosage lines (11, 12) comprising at least one first dosage line (11) sized to receive at least a predefined first fluid volume and one second dosage line (12) sized to receive at least a predefined second fluid volume;
one or more fluid chambers (43) for receiving liquid fluids being connected to said main line (2) via controllable first and second fluid chamber valves (44, 45) for blocking or releasing liquid fluid flow between said fluid chambers (43) and said main line (2);
at least one pressure actuator (15, 15') for generating a positive or negative pressure in said dosage lines (11, 12);
a controller (52) set up to control activity of said pressure actuator (15, 15') and said valves (8, 10, 13, 14, 44, 45) in a manner to mix said one or more first liquid fluids with said second liquid fluid.

2. The microfluidic system (1) according to claim 1, wherein said first and second dosage lines (11, 12) are connected to said main line (2) by at least one communication line (23, 30).

3. The microfluidic system (1) according to claim 2, wherein said at least one communication line (23, 30) connects said first and second dosage lines (11, 12).

4. The microfluidic system (1) according to the preceding claims 2 or 3, wherein said at least one communication line (23, 30) opens into said first and second dosage lines (11, 12) at first and second line openings (26, 27) defining first and second line portions (28, 29) in a manner that said at least one first line portion (28) of said first dosage line (11) is sized to receive at least said predefined first fluid volume and said at least one first line portion (28) of said second dosage line (12) is sized to receive at least said predefined second fluid volume.

5. The microfluidic system (1) according to claim 4, further including one or more third feed lines (35) for feeding system fluid to said main line (2), said third feed lines (35) being connected to said second line portions (29) of said first and second dosage lines (11, 12) and equipped with controllable third feed line valves (36, 37) for blocking or releasing liquid fluid flow between said third feed lines (35) and said first and second dosage lines (11, 12).

6. The microfluidic system (1) according to any one of the preceding claims 2 to 5, wherein said at least one communication line (23, 30) is being equipped with a third communication line valve (31) for blocking or releasing liquid fluid flow between said second communication line (30) and said main line (2).

7. The microfluidic system (1) according to any one of the preceding claims 2 to 6, wherein said at least one communication line (23, 30) is sized to receive at least a combined fluid volume of said predefined second fluid volume and one or more of said predefined first fluid volumes.

8. The microfluidic system (1) according to any one of the preceding claims 1 to 7, wherein said main line (2) is equipped with a static mixer (63) for mixing liquid fluids flowing through.

9. A process for mixing liquid fluids (53-55) in a microfluidic system (1), comprising:
- feeding one or more first liquid fluids (54, 55) into a main line (2);
- drawing said one or more first liquid fluids (54, 55) into at least one first fluid dosage line (11) connected to said main line (2) and sized to receive at least a predefined first fluid volume by generating a negative pressure therein;
- feeding a second liquid fluid (53) into said main line (2);
- drawing said second liquid fluid (53) into a second fluid dosage line (12) connected to said main line (2) and sized to receive at least a predefined second fluid volume by generating a negative pressure therein;
- discharging said first and second liquid fluids (53-55) into at least one fluid chamber (43) connected to said main line (2) by generating a positive pressure in said first and second fluid dosage lines (11, 12) so as to obtain a fluid mixture (61, 62) of said second liquid fluid (53) and said one or more first liquid fluids (54, 55).

10. The process according to claim 9, wherein said first and second liquid fluids (53-55) are simultaneously discharged into said fluid chamber (43).

11. The process according to claims 9 or 10, wherein said first liquid fluid (54, 55) is drawn into said first fluid dosage line (11) beyond a first fluid dosage line opening (26) where at least one communication line (23, 30) connected to said main line (2) opens into said first fluid dosage line (11) and/or wherein said second liquid fluid (53) is drawn into said second fluid dosage line (12) beyond a second fluid dosage line opening (27) where said at least one communication line (23, 30) opens into said second fluid dosage line (12).

12. The process according to claim 11, wherein a portion of said first liquid fluid (54, 55) located beyond said first fluid dosage line opening (26) is discharged through said first fluid dosage line opening (26) and/or wherein a portion of said second liquid fluid (53) located beyond said second fluid dosage line opening (27) is discharged through said second fluid dosage line opening (27).

13. The process according to claim 12, wherein said portion of said first liquid fluid (54) is discharged through said first fluid dosage line opening (26) by means of liquid system fluid (56) and/or wherein said portion of said second liquid fluid (53) is discharged through said second fluid dosage line opening by means of liquid system fluid (56).

14. The process according to any one of the preceding claims 9 to 13, wherein said fluid mixture (61) is drawn into a fluid retraction line (23, 30) connected to said main line (2) and sized to receive at least a combined volume of said predefined second fluid volume and one or more of said predefined first fluid volumes by generating a negative pressure therein.

15. The process according to claim 14, wherein said fluid mixture (61) and another first liquid fluid (55) are discharged into said fluid chamber (43).
